# EUROPEAN PATENT SPECIFICATION

(11) **EP 3 477 217 B1**
(45) Date of publication and mention of the grant of the patent: **29.07.2020**
(21) Application number: 17838956.5
(22) Date of filing: 28.02.2017
(51) Int. Cl.: F24H 1/00, F24H 4/02, F24D 19/10

(54) **HOT WATER SUPPLY SYSTEM AND HOT WATER SUPPLY METHOD**
WARMWASSERVERSORGUNGSSYSTEM UND WARMWASSERVERSORGUNGSVERFAHREN
SYSTÈME D'ALIMENTATION EN EAU CHAUDE ET PROCÉDÉ D'ALIMENTATION EN EAU CHAUDE

(30) Priority: 09.08.2016 JP 2016156122
(43) Date of publication of application: 01.05.2019
(73) Proprietor: Mitsubishi Electric Corporation, Chiyoda-ku Tokyo 100-8310 (JP)
(72) Inventor: NOMURA, Yasumitsu, Tokyo 100-8310 (JP); YAJI, Yoshikazu, Tokyo 100-8310 (JP); SUZUKI, Shunkei, Tokyo 100-8310 (JP); NAKAZONO, Junichi, Tokyo 100-8310 (JP); IPPOSHI, Shigetoshi, Tokyo 100-8310 (JP)
(74) Representative: Trinks, Ole
(86) International application number: PCT/JP2017/007716
(87) International publication number: WO 2018/029880

(56) References cited:
- DE-A1-102010 014 767
- JP-A- 2007 162 969
- JP-A- 2007 162 969
- JP-A- 2008 215 810
- JP-A- 2008 215 810
- JP-B2- H0 313 608

## Description

### TECHNICAL FIELD

The present invention relates to a hot water supply system for supplying hot water obtained by mixing hot water heated using natural energy and hot water heated using electric power energy, and a hot water supply method.

### BACKGROUND ART

There is known a hot water supply system for supplying hot water that includes both of a natural energy water heating system configured to prepare hot water by heating water using natural energy such as sunlight, wind power, tidal power, and geothermal power and an electric power energy water heating system configured to prepare hot water by heating water using electric power energy. For example, there is known a hot water supply system that includes both of a solar water heating system configured to prepare hot water by heating water using collected solar heat and a heat pump water heating system configured to prepare hot water by heating water using a heat pump (for example, see Patent Literature 1). Such a hot water supply system mixes hot water prepared by the natural energy water heating system and hot water prepared by the electric power energy water heating system to supply the mixed hot water. Specifically, the hot water supply system supplies the mixed hot water of the hot water prepared by the natural energy water heating system and the hot water prepared by the electric power energy water heating system. By using the natural energy in addition to the electric power energy, such a hot water supply system can enjoy benefits of not only stability provided by the electric power energy water heating system but also energy saving performance provided by the natural energy water heating system.
Patent Literature 2 discloses a hot water supply system comprising a hot water storage tank, a heat pump unit which supplies hot water in the hot water storage tank, an auxiliary heat source, a mixing valve mixing the hot water from the hot water storage tank with the hot water from the auxiliary heat source and a control device. The control device is configured to actuate the auxiliary heat source and the mixing valve in accordance with heat quantity of hot water in the hot water storage tank to control supply of hot water to the supply hot water part. Patent literature 2 discloses a hot water supply system having the features of the preamble of claim 1, and a hot water supply method having the features of the preamble of claim 12.

### CITATION LIST

### PATENT LITERATURE

- Patent Literature 1:: Japanese Unexamined Patent Application Publication JP 2007-162969 A
- Patent Literature 2:: Japanese Unexamined Patent Application Publication JP 2008-215810 A

### SUMMARY OF INVENTION

### TECHNICAL PROBLEM

However, a heating capability of the natural energy water heating system greatly depends on natural conditions. For example, in the solar water heating system, the heating capability greatly depends on weather and climate. During the winter months with shorter daylight hours than those during the summer months, the heating capability is decreased. Even during the summer months, the heating capability is decreased in cloudy or rainy weather compared to sunny weather. The continued lowering in the heating capacity makes it difficult to increase the temperature of the stored hot water. When the hot water cannot be sufficiently heated, in the hot water supply system, the hot water prepared by the natural energy water heating system can be hardly used. For example, when the hot water not sufficiently heated is contained in mixed hot water to be directly supplied as hot water to be supplied, the temperature of the hot water to be supplied may not reach the set temperature. For example, when the hot water not sufficiently heated is contained in mixed hot water to be directly supplied as hot water to be supplied, the hot water to be supplied is not in a uniform mixed condition, resulting in variations in temperature of the hot water to be supplied. In addition, for example, when the hot water not sufficiently heated is contained in mixed hot water to be directly supplied as hot water to be supplied, this may cause reduction in an antibacterial effect by which intracellular parasite bacteria such as legionella or pathogenic bacteria such as salmonella is prevented from being bred. Provision of an additional heating device to reheat hot water not sufficiently heated by the natural energy water heating system may result in cost increase in the system.

The present invention has been made in view of the above problems, and an object thereof is to provide a hot water supply system that can suppress cost increase in the system even when low-temperature hot water is used in addition to high-temperature hot water, or, for example, even when natural energy is used in addition to electric power energy, as well as to a hot water supply method.

### SOLUTION TO PROBLEM

A hot water supply system according to one aspect of the present invention mixes first hot water supplied by a first water heating system and second hot water supplied by a second water heating system, the second hot water having a temperature higher than a temperature of the first hot water to supply the mixed hot water. The hot water supply system according to the present invention includes a first mixed hot water generating unit configured to generate first mixed hot water obtained by mixing the first hot water and the second hot water at a first mixing ratio, a first temperature detecting unit configured to detect a temperature of the first mixed hot water, a first mixed hot water temperature setting unit configured to set a temperature of the first mixed hot water, a first changing unit configured to change the first mixing ratio based on the set temperature by the first mixed hot water temperature setting unit and the detected temperature by the first temperature detecting unit, a second mixed hot water generating unit configured to generate second mixed hot water obtained by mixing supply water into the first mixed hot water at a second mixing ratio, a second temperature detecting unit configured to detect a temperature of the second mixed hot water, a second mixed hot water temperature setting unit configured to set the temperature of the second mixed hot water, and a second changing unit configured to change the second mixing ratio based on the set temperature by the second mixed hot water temperature setting unit and the detected temperature by the second temperature detecting unit, wherein the hot water supply system supplies the second mixed hot water.

A hot water supply method according to one aspect of the present invention is performed by supplying hot water obtained by mixing first hot water supplied by a first water heating system and second hot water supplied by a second water heating system, the second hot water having a temperature higher than a temperature of the first hot water. The hot water supply method according to the present invention includes a first mixed hot water generating step of generating a first mixed hot water obtained by mixing the first hot water and the second hot water at a first mixing ratio, a first temperature detecting step of detecting a temperature of the first mixed hot water, a first mixed hot water temperature setting step of setting the temperature of the first mixed hot water, a first changing step of changing the first mixing ratio based on the set temperature of the first mixed hot water and the detected temperature of the first mixed hot water, a water supplying step of supplying water, a second mixed hot water generating step of generating second mixed hot water obtained by mixing supply water into the first mixed hot water at a second mixing ratio, a second temperature detecting step of detecting a temperature of the second mixed hot water, a second mixed hot water temperature setting step of setting the temperature of the second mixed hot water, a second changing step of changing the second mixing ratio based on the set temperature of the second mixed hot water and the detected temperature of the second mixed hot water, and a hot water supplying step of supplying the second mixed hot water.

### ADVANTAGEOUS EFFECTS OF INVENTION

According to an aspect of the preset invention, when the first mixed hot water obtained by mixing the first hot water supplied by the first water heating system and the second hot water supplied by the second water heating system and having the temperature higher than the temperature of the first hot water is used to supply the hot water, the mixing ratio of the first hot water and the second hot water is changed based on the temperature of the first mixed hot water. Therefore, it is possible to provide a hot water supply system that can suppress cost increase in the system even when low-temperature hot water is used in addition to high-temperature hot water, that is, even when, for example, natural energy is used in addition to electric power energy, and a hot water supply method.

### BRIEF DESCRIPTION OF DRAWINGS

- FIG. 1: FIG. 1 is a schematic diagram illustrating a schematic configuration of a hot water supply system according to Embodiment 1.
- FIG. 2: FIG. 2 is a schematic diagram illustrating a schematic configuration of control in a hot water supply system 1 according to Embodiment 1.
- FIG. 3: FIG. 3 is a schematic diagram illustrating a schematic configuration of a hot water supply system according to Embodiment 2.
- FIG. 4: FIG. 4 is a schematic diagram illustrating a schematic configuration of control in the hot water supply system according to Embodiment 2.
- FIG. 5: FIG. 5 is a control flowchart when a target temperature is determined in a mixed hot water delivery system according to Embodiment 2.
- FIG. 6: FIG. 6 is a schematic diagram illustrating a schematic configuration of a hot water supply system according to Embodiment 3.
- FIG. 7: FIG. 7 is a schematic diagram illustrating a schematic configuration of control in the hot water supply system according to Embodiment 3.
- FIG. 8: FIG. 8 is a control flowchart when a target temperature is determined in a mixed hot water delivery system according to Embodiment 3.
- FIG. 9: FIG. 9 is a schematic diagram illustrating a schematic configuration of a hot water supply system according to Embodiment 4.

### DESCRIPTION OF EMBODIMENTS

Embodiments of a hot water supply system disclosed in the present application will be described hereinafter with reference to the accompanying drawings. Note that the embodiments described below are merely examples, and the present invention is not limited to those embodiments.

### Embodiment 1

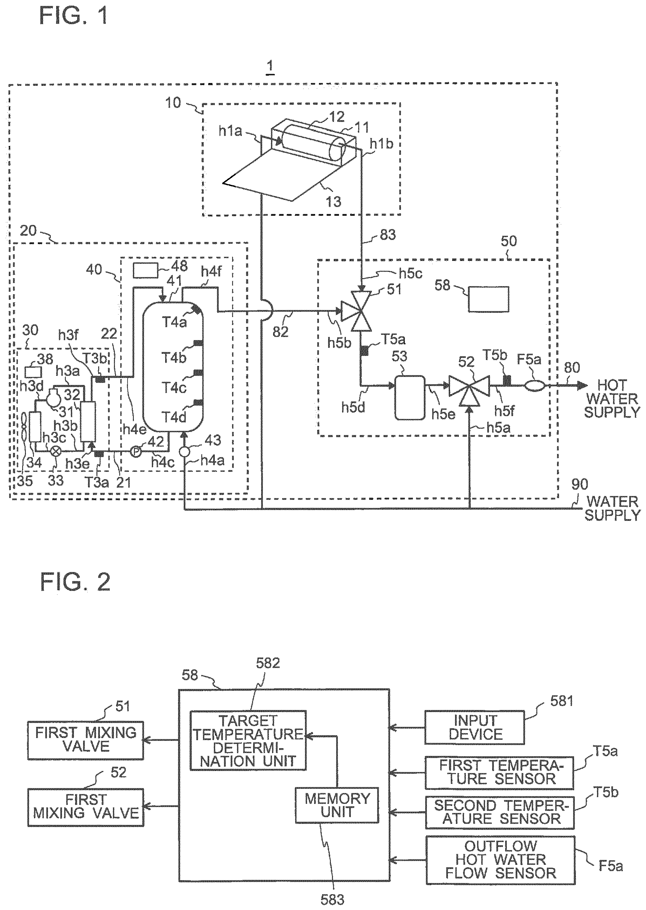

FIG. 1 is a schematic diagram illustrating a schematic configuration of a hot water supply system 1 according to Embodiment 1. FIG. 2 is a schematic diagram illustrating a schematic configuration of control in the hot water supply system 1 according to Embodiment 1. The hot water supply system 1 includes a solar water heating system 10 configured to store and use hot water heated by solar heat collected by a solar heat collector 13, a heat pump hot water supply system 20 configured to store and use the hot water heated by a heat pump as water to be supplied as hot water, and a mixed hot water delivery system 50 configured to mix hot water from the solar water heating system 10 and hot water from the heat pump hot water supply system 20 and supply the mixed hot water. The solar water heating system 10 is one example of the natural energy water heating system configured to prepare hot water by heating water using natural energy, and the heat pump hot water supply system 20 is one example of the electric power energy water heating system configured to prepare hot water by heating water using electric power energy. A heating capability of the natural energy water heating system using the natural energy such as solar heat greatly depends on natural conditions. However, the heat pump hot water supply system 20 configured to prepare hot water by heating water using the electric power energy can prepare hot water that is stably heated regardless of the natural conditions. Therefore, the heat pump hot water supply system 20 can easily supply hot water having a temperature higher than that of the hot water supplied by the solar water heating system 10. Specifically, the solar water heating system 10 is one example of the first water heating system according to the present invention, and the heat pump hot water supply system 20 is one example of the second water heating system according to the present invention.

The solar water heating system 10 includes the solar heat collector 13 configured to collect solar heat, a hot water storage tank 12 configured to store hot water heated by solar heat collected by the solar heat collector 13, and a casing 11 housing the hot water storage tank 12 and other devices.

The solar water heating system 10 includes a water supply pipe h1a, and the water supply pipe h1a is connected to an on-site water supply pipe 90 and the hot water storage tank 12. The water supply pipe h1a receives water supplied from the outside of the hot water supply system 1 through the on-site water supply pipe 90, and sends the water to the hot water storage tank 12.

The solar heat collector 13 is connected to a lower portion of the hot water storage tank 12. The supply water sent to the hot water storage tank 12 flows into the solar heat collector 13 connected to the lower portion of the hot water storage tank 12. The supply water having flowed into the solar heat collector 13 is heated by the solar heat collected by the solar heat collector 13, so that the specific gravity of the supply water is reduced. The supply water having the specific gravity reduced due to heating returns to the hot water storage tank 12 connected to an upper portion of the solar heat collector 13 to be stored in the hot water storage tank 12 as hot water.

The solar water heating system 10 includes an outflow hot water pipe h1b for sending the hot water stored in the hot water storage tank 12 to the outside. The outflow hot water pipe h1b is connected to an on-site outflow hot water pipe 83 for supplying hot water on-site where the hot water supply system 1 is installed. The hot water stored in the hot water storage tank 12 is supplied from the outflow hot water pipe h1b to the on-site outflow hot water pipe 83. When the hot water stored in the hot water storage tank 12 flows into the on-site outflow hot water pipe 83, new supply water is supplied to the hot water storage tank 12 through the water supply pipe h1a. Thus, in the hot water storage tank 12, part of the stored hot water is replaced with the new supply water.

In the solar water heating system 10, the water supplied from the on-site water supply pipe 90 is supplied to the hot water storage tank 12, flows into the solar heat collector 13, is heated to become hot water, returns to the hot water storage tank 12 to be stored therein, and then is supplied to the on-site outflow hot water pipe 83. In the process from supply of water to the hot water storage tank 12 to supply of the water to the on-site outflow hot water pipe 83, power consumption is not required. Therefore, the solar water heating system 10 has excellent energy saving performance.

The heating capability of the solar heat collector 13 depends on solar heat collectable by the solar heat collector 13. Thus, the temperature of the hot water stored in the hot water storage tank 12 may be increased up to about 50 to 70 degrees C in sunny weather during the summer months, but may be about 30 to 40 degrees C during the winter months or in cloudy or rainy weather during the summer months.

When the hot water is stored at a predetermined temperature for a long time, an additional heating device may be required to increase the temperature of the hot water up to a temperature substantially the same as that of the hot water of the solar heat collector 13 in sunny weather during the summer months. For example, a bacterial eliminator may need to be added to suppress the breeding of bacteria in the stored hot water. For example, when the hot water at a temperature around 40 degrees C is stored in the solar water heating system 10 for one to two weeks, the bacterial eliminator may need to be added to eliminate legionella in the stored hot water. Thus, adding such a heating device or such a bacterial eliminator may cause cost increase in the system.

The heat pump hot water supply system 20 includes a heat pump unit 30 configured to heat water using heat received from the air to generate hot water, and a hot water storage unit 40 configured to transfer the supply water to the heat pump unit 30 and store and use the water to be supplied as hot water that is generated by the heat pump unit 30.

The heat pump unit 30 includes a water supply pipe h3e, a hot water supply pipe h3f, a heat exchanger 32, a temperature sensor T3a, and a temperature sensor T3b. The heat exchanger 32 is provided between the water supply pipe h3e and the hot water supply pipe h3f. The temperature sensor T3a is a detecting unit that detects the temperature of the water flowing in the water supply pipe h3e. The temperature sensor T3b is a detecting unit that detects the temperature of the hot water flowing in the hot water supply pipe h3f. The water supply pipe h3e is connected to the hot water storage unit 40 through an on-site connection pipe 21.

The hot water supply pipe h3f is connected to the hot water storage unit 40 through an on-site connection pipe 22. The water to be supplied as hot water stored in the hot water storage unit 40 is transferred to the water supply pipe h3e through the on-site connection pipe 21. The water to be supplied as hot water that has transferred to the water supply pipe h3e returns to the hot water storage unit 40 through the heat exchanger 32, the hot water supply pipe h3f, and the on-site connection pipe 22.

The heat pump unit 30 further includes a compressor 31, a refrigerant pipe h3a, the heat exchanger 32, a refrigerant pipe h3b, a pressure reducing mechanism 33, a refrigerant pipe h3c, an air heat exchanger 34, and the refrigerant pipe h3d. The compressor 31, the refrigerant pipe h3a, the heat exchanger 32, the refrigerant pipe h3b, the pressure reducing mechanism 33, and the refrigerant pipe h3c, the air heat exchanger 34, and the refrigerant pipe h3d are connected in this order, so that these components in the heat pump unit 30 form a refrigerant circuit in which refrigerant circulates. As the refrigerant, natural refrigerant such as CO2, or propane, or HFC-based refrigerant such as R410A, or R32 can be used, for example.

The heat pump unit 30 further includes a controller 38. The controller 38 is, for example, a microprocessor, and can acquire information on detection values detected by the temperature sensors T3a and T3b, and control a rotation speed of the compressor 31, an opening degree of an expansion mechanism 33, and a rotation speed of an air fan 35. The controller 38 can communicate with a controller 48 (which will be described later) in the hot water storage unit 40.

In the heat pump unit 30, the controller 38 communicates with the controller 48 in the hot water storage unit 40 to thereby perform a heating operation through the heat exchanger 32. In the heating operation, the compressor 31 compresses and discharges the refrigerant. The discharged refrigerant is guided to the heat exchanger 32 through the refrigerant pipe h3a. The heat exchanger 32 exchanges heat between the refrigerant guided from the refrigerant pipe h3a and the supply water transferred from the hot water storage unit 40. The supply water whose heat has been exchanged by the heat exchanger 32 is heated to become hot water to be supplied, and then returns to the hot water storage unit 40 through the hot water supply pipe h3f. The refrigerant whose heat has been exchanged by the heat exchanger 32 rejects the heat, and is guided to the pressure reducing mechanism 33 through the refrigerant pipe h3b.

The pressure reducing mechanism 33 is, for example, an electronic expansion valve in which the refrigerant from the refrigerant pipe h3b is subjected to throttle expansion to be brought into a reduced-pressure state. The refrigerant that has been depressurized in the pressure reducing mechanism 33 is guided to the air heat exchanger 34 through the refrigerant pipe h3c. In the air heat exchanger 34, the refrigerant absorbs the heat from air. The refrigerant that has absorbed the heat returns to the compressor 31 through the refrigerant pipe h3d. The refrigerant that has returned to the compressor 31 is compressed again and discharged, and is then guided to the heat exchanger 32 through the refrigerant pipe h3a. The water to be supplied as hot water is continuously generated by the above-described heating operation.

The hot water storage unit 40 includes a hot water storage tank 41, a water supply pipe h4a, and an outflow hot water pipe h4f. The water supply pipe h4a is connected between the on-site water supply pipe 90 and a lower portion of the hot water storage tank 41. A pressure reducing mechanism 43 is disposed in an intermediate portion of the water supply pipe h4a. The pressure reducing mechanism 43 is, for example, a pressure reducing valve depressurizing the water supplied from the outside of the hot water supply system 1 to a predetermined water pressure, and supply the supply water that has been depressurized by the pressure reducing mechanism 43 to the hot water storage tank 41.

The hot water storage tank 41 can store the water to be supplied as hot water that is heated and generated by the heat pump unit 30, and the water supplied through the pressure reducing mechanism 43 of the water supply pipe h4a. Since the water to be supplied as hot water has a temperature higher than that of the supply water, the water to be supplied as hot water has a specific gravity smaller than that of the supply water. Thus, the water to be supplied as hot water is stored in an upper portion in the hot water storage tank 41, and the supply water is stored in a lower portion in the hot water storage tank 41.

The outflow hot water pipe h4f is connected between an on-site outflow hot water pipe 82 and the upper portion of the hot water storage tank 41. The water to be supplied as hot water that is stored in the upper portion in the hot water storage tank 41 is supplied to the on-site outflow hot water pipe 82 through the outflow hot water pipe h4f. When the water to be supplied as hot water is supplied from the upper portion in the hot water storage tank 41, the supply water that has flowed through the on-site water supply pipe 90 is supplied to the lower portion in the hot water storage tank 41 from the water supply pipe h4a through the pressure reducing mechanism 43. Thus, since the water to be supplied as hot water is supplied from the hot water storage tank 41, an amount of heat accumulated in the hot water storage tank 41 is reduced.

The hot water storage tank 41 includes a plurality of temperature sensors T4a, T4b, T4c, and T4d. The plurality of temperature sensors T4a, T4b, T4c, and T4d each are a detecting unit that can detect the temperature of water to be supplied as hot water and supply water that is stored in the hot water storage tank 41. The temperature sensor T4a is disposed on an upper portion in the hot water storage tank 41. The plurality of temperature sensors T4b, T4c, and T4d are disposed on a side surface in the hot water storage tank 41. The plurality of temperature sensors T4b, T4c, and T4d are disposed at predetermined intervals in an up-down direction.

The hot water storage unit 40 includes the controller 48. The controller 48 is, for example, a microprocessor, and acquires information on detection values detected by the temperature sensors T4a, T4b, T4c, and T4d. The controller 48 also calculates the amount of heat accumulated in the hot water storage tank 41 based on the acquired information, and monitors the hot water storage situation in the hot water storage unit 40. Providing the plurality of temperature sensors T4a, T4b, T4c, and T4d improves the monitoring accuracy of the hot water storage situation.

The hot water storage unit 40 further includes a water supply pipe h4c, and a hot water supply pipe h4e. The water supply pipe h4c is provided with a boiling pump 42.

When the monitoring result showing that the amount of heat accumulation in the hot water storage tank 41 is decreased below a predetermined amount is obtained, the controller 48 performs a boiling operation to increase the amount of heat accumulated in the hot water storage tank 41. In the boiling operation, the controller 48 rotates the boiling pump 42 to transfer the supply water located in the lower portion in the hot water storage tank 41 to the heat pump unit 30 through the water supply pipe h4c. The controller 48 also communicates with the controller 38 in the heat pump unit 30 to start the heating operation using the heat pump unit 30. The water to be supplied as hot water that has been generated by the heating operation using the heat pump unit 30 flows through the hot water supply pipe h4e, and is stored in the upper portion in the hot water storage tank 41. As a result, the amount of heat accumulated in the hot water storage tank 41 is increased.

While communicating with the controller 38 in the heat pump unit during the boiling operation, the controller 48 controls the rotation speed of the boiling pump 42 so that a value detected by the temperature sensor T3b approaches a target boiling temperature. The target boiling temperature is set to a predetermined temperature of 60 degrees C + α in consideration of the easiness of temperature control when the hot water is supplied from the hot water storage tank 41. Bacteria such as legionella can be generally killed in the hot water heated at 60 degrees C or higher. Then, the target boiling temperature is set at a predetermined temperature of 60 degrees C + α to suppress the breeding of bacteria in the water to be supplied as hot water in the hot water storage tank 41. The α represents the degree of allowance to be added to 60 degrees C, and, for example, α = 5 degrees C.

When the monitoring result showing that the amount of heat accumulation in the hot water storage tank 41 exceeds a predetermined amount is obtained, the controller 48 finishes the boiling operation. To finish the boiling operation, the controller 48 stops the boiling pump 42. The controller 48 also communicates with the controller 38 in the heat pump unit 30 to stop the heating operation using the heat pump unit 30.

The above-described boiling operation enables water to be supplied as hot water to be easily stored in the upper portion in the hot water storage tank 41, the water to be supplied as hot water having a temperature higher than that of the hot water stored in the hot water storage tank 12 of the solar water heating system 10, and, for example, the water to be supplied as hot water stored in the upper portion in the hot water storage tank 41 has a temperature that can be relatively easily controlled when the hot water is supplied from the hot water storage tank 41. For example, the water to be supplied as hot water stored in the hot water storage tank 41 has a temperature of, for example, 65 degrees C at which bacteria such as legionella can be killed, and the stored water to be supplied as hot water having a temperature of 65 degrees C is supplied through the on-site outflow hot water pipe 82.

In the heat pump hot water supply system 20, the power is consumed by the compressor 31, the expansion mechanism 33, the air fan 35, the controller 38, the boiling pump 42, and the controller 48. In the heat pump hot water supply system 20, the power used by the compressor 31 occupies a large percentage of the total power consumption.

The mixed hot water delivery system 50 includes a first mixing valve 51, a first mixed water pipe h5d, an inflow water pipe h5b, an inflow water pipe h5c, a hot water storage tank 53, and a first temperature sensor T5a. The first temperature sensor T5a is a detecting unit that detects the temperature of first mixed water flowing in the first mixed water pipe h5d.

The inflow water pipe h5c is connected to the on-site outflow hot water pipe 83 to guide the hot water from the solar water heating system 10 to the first mixing valve 51. The inflow water pipe h5b is connected to the on-site outflow hot water pipe 82 to guide the water to be supplied as hot water from the heat pump hot water supply system 20 to the first mixing valve 51.

The first mixing valve 51 is connected to the inflow water pipe h5c, the inflow water pipe h5b, and the first mixed water pipe h5d, and is an electric valve in which the opening degree of a valve body can be adjusted by an electric motor. The first mixing valve 51 mixes the hot water from the solar water heating system 10 and the water to be supplied as hot water from the heat pump hot water supply system 20 to generate the first mixed water, and guides the generated first mixed water to the hot water storage tank 53 through the first mixed water pipe h5d. The generated first mixed water is stored in the hot water storage tank 53. The first mixing valve 51 can adjust a mixing ratio of the hot water from the solar water heating system 10 and the water to be supplied as hot water from the heat pump hot water supply system 20 so that the temperature of the first mixed water to be stored in the hot water storage tank 53 can be adjusted. That is, the first mixing valve 51 is one example of the first mixed hot water generating unit that generates first mixed hot water obtained by mixing first hot water and second hot water according to the present invention at a first mixing ratio. Here, it is only required that the hot water storage tank 53 temporarily stores the first mixed water, and the hot water storage tank 53 is, for example, a cylindrical hot water storage unit, or for example, a cuboidal hot water storage unit. For example, the hot water storage tank 53 may be integrally formed with the first mixed water pipe h5d so that a part of the first mixed water pipe h5d is expanded to temporarily store the hot water.

The mixed hot water delivery system 50 includes a second mixing valve 52, a second mixed water pipe h5f, an inflow water pipe h5a, an inflow water pipe h5e, a temperature sensor T5b, and an outflow hot water flow sensor F5a. The temperature sensor T5b is a detecting unit configured to detect a temperature of second mixed water flowing in the second mixed water pipe h5f. The outflow hot water flow sensor F5a is a detecting unit configured to detect a flow volume of the second mixed water flowing in the second mixed water pipe h5f.

The inflow water pipe h5a is connected to the on-site water supply pipe 90 to guide the water supplied from the outside of the hot water supply system 1 to the second mixing valve 52. The temperature of the supply water is basically lower than that of the first hot water, lower than that of the second hot water, and lower than that of the first mixed water. The inflow water pipe h5e is connected to the hot water storage tank 53 to guide the first mixed water stored in the hot water storage tank 53 to the second mixing valve 52. It is desirable that the first mixed water pipe h5d is connected to an upper portion of the hot water storage tank 53, and it is desirable that the inflow water pipe h5e is connected to a lower portion of the hot water storage tank 53. Thus, the first mixed water that is mixed well in the hot water storage tank 53 can be guided to the second mixing valve 52.

The second mixing valve 52 is connected to the inflow water pipe h5a, the inflow water pipe h5e, and the second mixed water pipe h5f, and is an electric valve in which the opening degree of a valve body can be adjusted by an electric motor. The second mixing valve 52 mixes the first mixed water from the hot water storage tank 53 and the water supplied from the outside of the hot water supply system 1 to generate the second mixed water, and supplies the generated second mixed water from an on-site hot water supply pipe 80 through the second mixed water pipe h5f. The second mixing valve 52 can adjust a mixing ratio of the first mixed water from the hot water storage tank 53 and the water supplied from the outside of the hot water supply system 1 so that the temperature of the second mixed water to be supplied from the on-site hot water supply pipe 80 can be adjusted. That is, the second mixing valve 52 is one example of the second mixed hot water generating unit that generates the second mixed hot water obtained by mixing the first mixed hot water obtained at the first mixing ratio according to the present invention and the supply water at a second mixing ratio. Furthermore, the inflow water pipe h5a is one example of the water supply unit that supplies water according to the present invention.

The on-site hot water supply pipe 80 is connected to a hot water supply terminal (not illustrated) such as a shower or a tap. Thus, a user of the hot water supply system 1 can use the second mixed water supplied to the on-site hot water supply pipe 80 from the second mixed water pipe h5f using the hot water supply terminal. That is, the second mixed water pipe h5f is one example of the hot water supply pipe to which the second mixed hot water according to the present invention is supplied.

The mixed hot water delivery system 50 further includes a controller 58. The controller 58 is, for example, a microprocessor, and includes a target temperature determination unit 582, and a memory unit 583. The controller 58 can communicate with an input device 581.

The memory unit 583 is, for example, a non-volatile memory, and stores a specified hot water temperature. Here, the specified hot water temperature is, for example, a temperature substantially the same as that of the hot water stored in the hot water storage tank 12 of the solar water heating system 10 in sunny weather during the summer months, for example, a temperature that can be relatively easily controlled when the hot water is supplied, or for example, a hot water temperature having an antibacterial effect by which bacteria such as legionella can be killed. That is, the memory unit 583 stores, for example, the above-described temperature in sunny weather during the summer months, the above-described temperature obtained in consideration of the easiness of temperature control, or the above-described temperature having an antibacterial effect. The specific antibacterial temperature stored in the memory unit 583 is, for example, 60 degrees C.

The target temperature determination unit 582 reads the specified hot water temperature such as an antibacterial temperature from the memory unit 583, and determines and sets a first target temperature that is a target temperature of the first mixed water based on the read specified hot water temperature such as an antibacterial temperature. For example, the first target temperature is a value obtained by adding β that represents the degree of allowance to the specified hot water temperature such as a temperature having an antibacterial effect. When β = 3 degrees C, the first target temperature is 63 degrees C. When the degree of allowance is not added, in other words, when β = 0 degrees C, the first target temperature is 60 degrees C. That is, the target temperature determination unit 582 is one example of the first mixed hot water temperature setting unit that sets the temperature of the first mixed hot water according to the present invention.

The input device 581 is a device to which a user inputs the hot water supply temperature of the hot water to be supplied from the hot water supply terminal, and is, for example, a remote controller. The target temperature determination unit 582 determines a second target temperature that is a target temperature of the second mixed water based on a desired hot water supply temperature input by the user. That is, the target temperature determination unit 582 receives hot water supply temperature information indicating the hot water supply temperature input by the user, and determines and sets the second target temperature that is a target temperature of the second mixed water based on the received hot water supply temperature information. The second target temperature is, for example, a value obtained by adding an add-on amount γ to the desired hot water supply temperature. The γ represents an add-on amount of heat expected to be rejected in the on-site hot water supply pipe 80 until the second mixed water supplied from the mixed hot water delivery system 50 reaches the hot water supply terminal. Such hot water supply temperature at a shower or a tap as the user desires is generally about 40 degrees C, and when γ = 2 degrees C, the second target temperature becomes 42 degrees C. In a case when an amount of rejected heat varies depending on seasons, the add-on amount γ may be changed for each season. The value of γ may be changed for each season, such that, for example, the add-on amount γ is 1 degree C in the spring months, the add-on amount γ is 0 degrees C in the summer months, the add-on amount γ is 1 degree C in the autumn months, and the add-on amount γ is 2 degrees C in the winter months. The target temperature determination unit 582 is one example of the second mixed hot water temperature setting unit that sets the temperature of the second mixed hot water according to the present invention.

The controller 58 monitors a detection value of the first temperature sensor T5a, a detection value of the second temperature sensor T5b, and a detection value of the outflow hot water flow sensor F5a. When the hot water is supplied through the hot water supply terminal, the detection value of the outflow hot water flow sensor F5a exceeds zero. When the detection value of the outflow hot water flow sensor F5a monitored by the controller 58 exceeds zero, the controller 58 controls a mixing ratio in the first mixing valve 51 so that the detection value of the first temperature sensor T5a approaches the first target temperature, and controls a mixing ratio in the second mixing valve 52 so that the detection value of the second temperature sensor T5b approaches the second target temperature. That is, the first temperature sensor T5a is one example of the first temperature detecting unit that detects a temperature of the first mixed hot water generated by the first mixed hot water generating unit according to the present invention, and the second temperature sensor T5b is one example of the second temperature detecting unit that detects a temperature of the second mixed hot water generated by the second mixed hot water generating unit according to the present invention. Furthermore, the controller 58 is one example of the first changing unit that changes the first mixing ratio based on the temperature set by the first mixed hot water temperature setting unit and the temperature detected by the first temperature detecting unit, and is one example of the second changing unit that changes the second mixing ratio based on the temperature set by the second mixed hot water temperature setting unit and the temperature detected by the second temperature detecting unit.

As described above, the first target temperature is determined based on the specified hot water temperature, for example, such as an antibacterial temperature at which bacteria can be killed. The specified hot water temperature is, for example, a temperature substantially the same as that of the hot water stored in the hot water storage tank 12 of the solar water heating system 10 in sunny weather during the summer months, for example, a temperature that can be relatively easily controlled when the hot water is supplied, or for example, a temperature having an antibacterial effect by which bacteria can be killed. Since the controller 58 controls the mixing ratio in the first mixing valve 51 so that the detection value of the first temperature sensor T5a approaches the determined first target temperature, the temperature of the first mixed water is, for example, 63 degrees C that is the temperature in sunny weather during the summer months, the temperature obtained in consideration of the easiness of temperature control, or the temperature having a high antibacterial effect. Thus, the temperature of the first mixed water can easily reach the set temperature, and an advantageous effect of suppressing the breeding of bacteria can be expected for the first mixed water.

The first mixed water having the temperature in sunny weather during the summer months, the temperature obtained in consideration of the easiness of temperature control, or the temperature having a high antibacterial effect is stored in the hot water storage tank 53 while the temperature of, for example, 63 degrees C is maintained. The first mixed water is maintained at the temperature in sunny weather during the summer months, the temperature obtained in consideration of the easiness of temperature control, or the temperature having a high antibacterial effect, which is not comfortable to use by the user. Then, the second target temperature is determined based on the hot water supply temperature desired by the user, and the second mixed water having the second target temperature of, for example, 42 degrees C is generated using the first mixed water having a temperature that can easily reach the set temperature and has a high antibacterial effect, so that the hot water having the desired hot water supply temperature of, for example, 40 degrees C is supplied. Accordingly, the hot water supply system 1 can be provided in which the hot water supply temperature can easily reach the set temperature and good comfort for the user is provided while the antibacterial effect is enhanced.

It takes time to mix well the hot water from the solar water heating system 10 and the water to be supplied as hot water from the heat pump hot water supply system 20 to obtain the desired temperature of the first mixed water. Therefore, the first mixed water whose temperature varies due to insufficient mixing may be discharged from the first mixing valve, or the first mixed water in which the antibacterial effect is not exerted over the whole first mixed water may be discharged from the first mixing valve. However, the first mixed water discharged from the first mixing valve flows into the hot water storage tank 53. The hot water storage tank 53 stores the first mixed water having a temperature in sunny weather during the summer months, the first mixed water having a temperature obtained in consideration of the easiness of temperature control, or the first mixed water having a high temperature and a high antibacterial effect, in other words, the first mixed water having a temperature equal to or higher than the specified hot water temperature, resulting in enhancement of the temperature variation-suppressing effect or the antibacterial effect for the first mixed water having flowed into the hot water storage tank 53. Accordingly, the temperature variation-suppressing effect or the antibacterial effect is further improved in the hot water supply system 1 as compared to a case where no hot water storage tank 53 is present.

In the hot water supply system 1 according to the present embodiment, even when the temperature of the hot water stored by the solar water heating system 10 is about 40 degrees C depending on weather, the first mixing valve 51 of the mixed hot water delivery system 50 can mix the water to be supplied as hot water with a temperature of 65 degrees C stored by the heat pump hot water supply system and the hot water with a temperature of 40 degrees C from the solar water heating system 10 to generate the first mixed water having, for example, a temperature substantially the same as that of the hot water stored in the hot water storage tank 12 of the solar water heating system 10 in sunny weather during the summer months, or for example, a temperature equal to or higher than the specified hot water temperature that is a temperature having an antibacterial effect. Thus, the hot water supply system 1 can be provided in which the temperature of the first mixed water can be increased up to a temperature substantially the same as that of the hot water stored in the hot water storage tank 12 of the solar water heating system 10 in sunny weather during the summer months, without installation of an additional heating device, or the hot water supply system 1 can be provided in which the antibacterial effect is improved for hot water supply. The hot water supply system 1 can be provided in which for example, even when bacteria are bred in the hot water of the solar water heating system 10, the first mixed water is stored in the hot water storage tank 53 in which the antibacterial temperature can be maintained so that bacteria can be skilled, and therefore an antibacterial function for the first mixed water during storage in the hot water storage tank 53 can be continued for a long time, and the temperature variation-suppressing effect or the antibacterial effect can be further improved for the hot water supply. Furthermore, since the temperature of the first mixed water with the temperature variation-suppressing effect or the antibacterial effect improved is controlled to be close to a desired temperature at the second mixing valve 52, the hot water supply system 1 can be provided in which good comfort for the user is provided while the temperature variation-suppressing effect or the antibacterial effect is improved. That is, it is possible to provide a hot water supply system that can suppress cost increase in the system even when low-temperature hot water is used in addition to high-temperature hot water, or, for example, even when natural energy is used in addition to electric power energy, and a hot water supply method.

### Embodiment 2

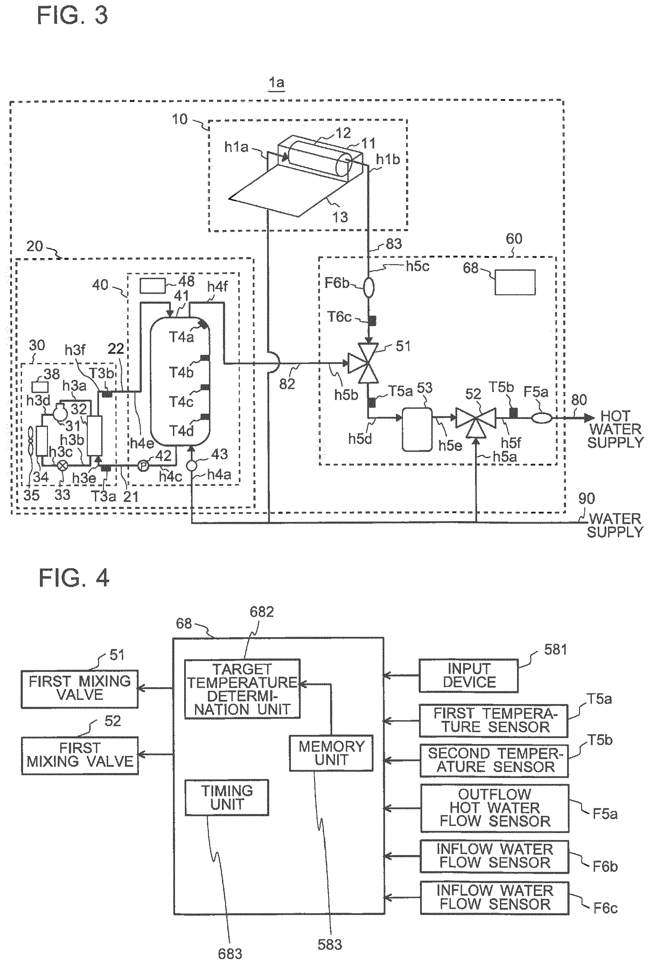

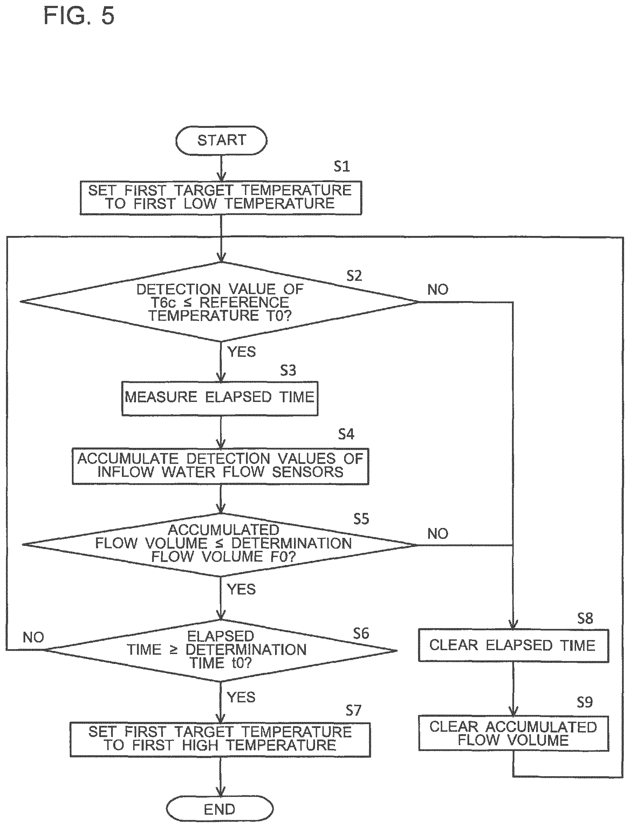

A hot water supply system 1a according to Embodiment 2 will be described with reference to FIG. 3, FIG. 4, and FIG. 5. FIG. 3 is a schematic diagram illustrating a schematic configuration of the hot water supply system 1a according to Embodiment 2. FIG. 4 is a schematic diagram illustrating a schematic configuration of control in the hot water supply system 1a according to Embodiment 2. FIG. 5 is a control flowchart when a target temperature is determined in a mixed hot water delivery system 60 according to Embodiment 2. The hot water supply system 1a according to Embodiment 2 is different from the hot water supply system 1 according to Embodiment 1 in the mixed hot water delivery system 60. Specifically, the mixed hot water delivery system 60 in the hot water supply system 1a according to Embodiment 2 is different from the mixed hot water delivery system 50 in the hot water supply system 1 according to Embodiment 1 in that the mixed hot water delivery system 60 includes an inflow water flow sensor F6b positioned upstream from the first mixing valve, an inflow water temperature sensor T6c, and a controller 68. The other configurations are the same as those of the hot water supply system 1 according to Embodiment 1. The hot water supply system 1a according to Embodiment 2 will be described hereinbelow focusing on the difference from the hot water supply system 1 according to Embodiment 1.

The hot water supply system 1a includes the solar water heating system 10, the heat pump hot water supply system 20, and the mixed hot water delivery system 60. The mixed hot water delivery system 60 mixes hot water from the solar water heating system 10 and the water to be supplied as hot water from the heat pump hot water supply system 20 to supply the mixed hot water.

The mixed hot water delivery system 60 includes the inflow water temperature sensor T6c and the inflow water flow sensor F6b. The inflow water temperature sensor T6c is a detecting unit that detects a temperature of the hot water from the solar water heating system 10 flowing in the inflow water pipe h5c. The inflow water flow sensor F6b is a detecting unit that detects a flow volume of the hot water from the solar water heating system 10 flowing in the inflow water pipe h5c.

The mixed hot water delivery system 60 includes the controller 68. The controller 68 is, for example, a microprocessor, and includes a target temperature determination unit 682, a memory unit 583, and a timing unit 683. The controller 68 communicates with an input device 581.

The target temperature determination unit 682 sets a first low temperature based on a desired temperature input by the user using the input device 581. The first low temperature is the same temperature as the desired temperature, for example. When the desired temperature is 40 degrees C, the first low temperature may be 40 degrees C. The target temperature determination unit 682 reads the specified hot water temperature such as a temperature having an antibacterial effect from the memory unit 583, and sets a first high temperature based on the read specified hot water temperature such as the temperature having an antibacterial effect. The first high temperature is, for example, a value obtained by adding β that represents the degree of allowance to the specified hot water temperature.

First, the target temperature determination unit 682 sets a first target temperature that is a target temperature of the first mixed water to the first low temperature (step S1). The first low temperature is the same temperature as the desired temperature, for example. When the desired temperature is 40 degrees C, the first low temperature may be 40 degrees C. The controller 68 detects a detection value of the inflow water temperature sensor T6c, and determines whether the detection value is equal to or lower than a reference temperature T₀ (step S2). When the controller 68 determines that the detection value is equal to or lower than the reference temperature T₀ (S2: YES), the controller 68 measures elapsed time during which the detection value of the inflow water temperature sensor T6c is equal to or lower than the reference temperature T₀ (step S3). The reference temperature T₀ is determined in consideration of a temperature of the hot water stored in the hot water storage tank 12 of the solar water heating system 10 in sunny weather during the summer months or a temperature at which the breeding of bacteria such as legionella becomes a problem. The reference temperature T₀ is, for example, 50 degrees C.

While the controller 68 measures the elapsed time during which the detection value of the inflow water temperature sensor T6c is equal to or lower than the reference temperature T₀, the controller 68 accumulates the detection values of the inflow water flow sensor T6b to calculate accumulated flow volume (step S4), and determines whether the accumulated flow volume is equal to or smaller than a determination flow volume F₀ (step S5). Here, the accumulated flow volume is an amount of outflow hot water supplied from the solar water heating system 10 while the temperature of the hot water flowing the inflow water pipe h5c is equal to or lower than the reference temperature T₀. The determination flow volume F₀ is, for example, 50L.

When the controller 68 determines that the accumulated flow volume is equal to or smaller than a determination flow volume F₀ (S5: YES), the controller 68 determines whether the elapsed time is equal to or longer than a determination time to (step S6). The determination time t₀ is determined in consideration of a time when supply water and hot water stored in the hot water storage tank 12 are replaced with new supply water and new hot water or a time when the breeding of bacteria such as legionella becomes a problem. The determination time to is, for example, one week.

When the controller 68 determines that the elapsed time is equal to or longer than the determination time t₀ (S6: YES), the target temperature determination unit 682 sets the first target temperature to the first high temperature (step S7). This is because the hot water in the hot water storage tank 12 of the solar water heating system 10 is not suitable to be used for the first mixed water obtained by mixing at the first low temperature. For example, this is because since the hot water in the hot water storage tank 12 of the solar water heating system 10 has a temperature at which the breeding of bacteria such as legionella occurs at a high probability and also an amount of outflow hot water from the hot water storage tank 12 is small, the supply water and the hot water stored in the hot water storage tank 12 are not replaced with new supply water and new hot water, and therefore the hot water in the hot water storage tank 12 should be subjected to heating treatment or sterilization treatment.

When the controller 68 determines that the accumulated flow volume exceeds the determination flow volume F₀ (S5: NO), the controller 68 clears the measured elapsed time (step S8), clears the calculated accumulated flow volume (step S9), and returns to the process to step S2. When the controller 68 determines that the detection value exceeds the reference temperature T₀ (S2: NO), the controller 68 also clears the measured elapsed time (step S8), clears the calculated accumulated flow volume (step S9), and returns to the process to step S2. When the controller 68 determines that the elapsed time is below the determination time t₀ (S6: NO), the controller 68 returns to the process to step S2. Then, steps S2 to S6 are repeated.

Through the above-described control flow, the hot water supply system 1a can accurately detect whether the hot water in the hot water storage tank 12 of the solar water heating system 10 is suitable to be used for the first mixed water obtained by mixing at the first low temperature, and can achieve a configuration in which the first target temperature is set to the first high temperature only when the first mixed water is not suitable for use at the first low temperature. As a specific example, the hot water supply system 1a can accurately detect whether the breeding of bacteria such as legionella occurs in the hot water in the hot water storage tank 12 of the solar water heating system 10 at a high probability, and can set the first target temperature to the first high temperature only when the breeding of bacteria such as legionella occurs at a high probability. That is, the target temperature determination unit 682 sets the first target temperature to the first high temperature, in other words, as a specific example, sets the first target temperature to a hot water temperature having a high antibacterial effect, when the first mixed water according to the present invention is not suitable for use at the first low temperature, in other words, as a specific example, when bacteria is mixed in the first hot water at a high probability. Furthermore, the target temperature determination unit 682 sets the first target temperature to the first low temperature, in other words, is one example of the first mixed hot water temperature setting unit that sets the first target temperature to a hot water temperature having a low antibacterial effect, when the first mixed water according to the present invention is suitable for use at the first low temperature, in other words, as a specific example, when bacteria is mixed into the first hot water at a low probability.

The controller 68 monitors a detection value of the first temperature sensor T5a, a detection value of the second temperature sensor T5b, and a detection value of the outflow hot water flow sensor F5a. When the detection value of the outflow hot water flow sensor F5a is larger than zero, the controller 68 controls the mixing ratio at the first mixing valve 51 so that the detection value of the first temperature sensor T5a approaches the first target temperature, and controls the mixing ratio at the second mixing valve 52 so that the detection value of the second temperature sensor T5b approaches the second target temperature.

When the first target temperature is the first low temperature, the mixing ratio of the first mixing valve 51 is set so that the amount ratio of the hot water from the solar water heating system 10 is larger and the amount ratio of the water to be supplied as hot water from the heat pump water heating is smaller than those when the first target temperature is the first high temperature. Thus, the amount of hot water supplied from the heat pump hot water supply system 20 is reduced, and the power consumption is reduced. Accordingly, the energy saving performance of the hot water supply system 1a is improved.

When the first target temperature is the first high temperature, the temperature of the first mixed water is, for example, 63 degrees C based on the specified hot water temperature such as a temperature having an antibacterial effect, the first mixed water can easily reach the set temperature, and the antibacterial effect in the first mixed water can be enhanced. The temperature of the second mixed water is, for example, 42 degrees C based on the desired hot water supply temperature, which provides good comfort for the user. Accordingly, the hot water supply system 1a can be provided in which the hot water supply temperature can easily reach the set temperature, and good comfort for the user is provided while the antibacterial effect is enhanced.

According to the above-described hot water supply system 1a, when the hot water in the hot water storage tank 12 of the solar water heating system 10 is suitable to be used for the first mixed water obtained by mixing at the first low temperature, in other words, as a specific example, when the breeding of bacteria such as legionella occurs in the hot water in the hot water storage tank 12 of the solar water heating system 10 at a low probability, the amount ratio of the hot water from the solar water heating system 10 that is used during hot water supply can be increased. When the hot water in the hot water storage tank 12 of the solar water heating system 10 is not suitable to be used for the first mixed water obtained by mixing at the first low temperature, in other words, as a specific example, when the breeding of bacteria occurs at a high probability, the amount ratio of the hot water from the solar water heating system 10 that is used during hot water supply can be reduced. Accordingly, the hot water supply temperature can easily reach the set temperature, and the energy saving performance can be improved by improving the use efficiency of the solar water heating system 10 while the antibacterial effect is enhanced.

### Embodiment 3

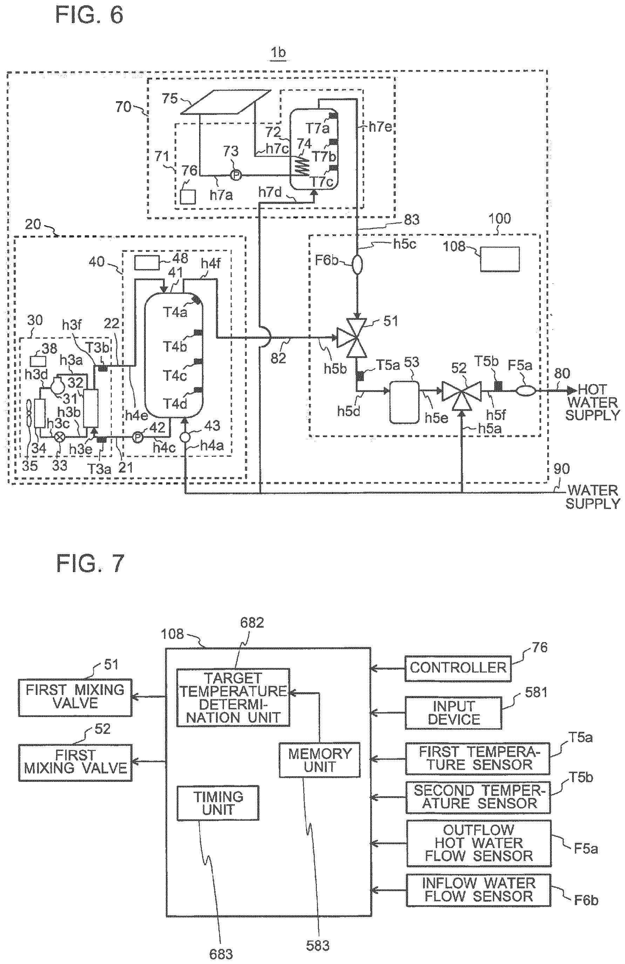

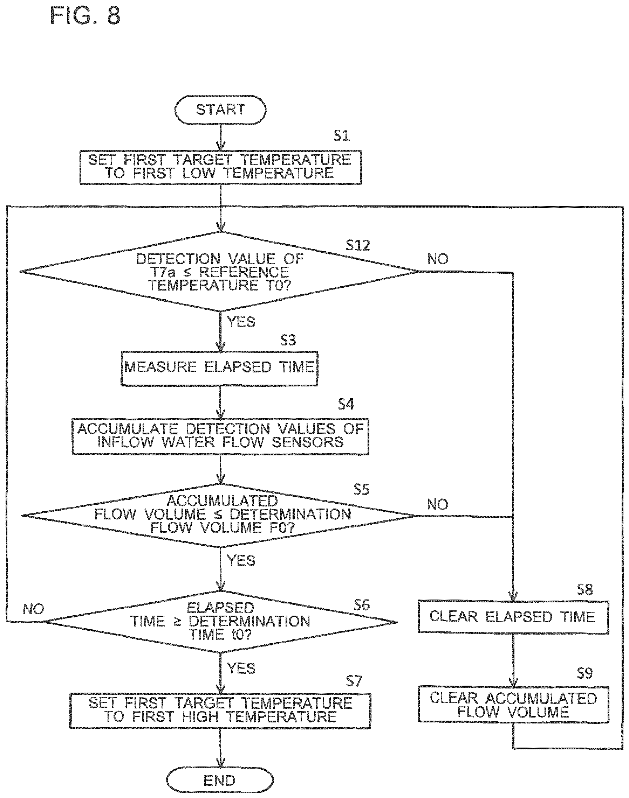

A hot water supply system 1b according to Embodiment 3 will be described with reference to FIG. 6, FIG. 7, and FIG. 8. FIG. 6 is a schematic diagram illustrating a schematic configuration of the hot water supply system 1b according to Embodiment 3. FIG. 7 is a schematic diagram illustrating a schematic configuration of control in the hot water supply system 1b according to Embodiment 3. FIG. 8 is a control flowchart when a target temperature is determined in a mixed hot water delivery system 100 according to Embodiment 3.

The hot water supply system 1b according to Embodiment 3 is different from the hot water supply system 1a according to Embodiment 2 in a solar water heating system 70. The mixed hot water delivery system 100 of the hot water supply system 1b does not include the inflow water temperature sensor T6c that is included in the mixed hot water delivery system 60 of the hot water supply system 1a, and includes a controller 108 that is different from the controller included in the mixed hot water delivery system 60 of the hot water supply system 1a. The other configurations are the same as those of Embodiment 2. The hot water supply system 1b according to Embodiment 3 will be described hereinbelow focusing on the difference from the hot water supply system 1a according to Embodiment 2.

The solar water heating system 70 includes a solar heat collector 75 that is installed mainly on a roof, and a hot water storage unit 71 that is installed mainly on the ground.

The hot water storage unit 71 includes a hot water storage tank 72, a water supply pipe h7d, and an outflow hot water pipe h7e. The water supply pipe h7d is connected between the on-site water supply pipe 90 and a lower portion of the hot water storage tank 72, and the supply water supplied from the on-site water supply pipe 90 is stored in the lower portion of the hot water storage tank 72. The outflow hot water pipe h7e is connected between an on-site outflow hot water pipe 83 and the upper portion of the hot water storage tank 72 so that the hot water that is stored in the upper portion in the hot water storage tank 72 is supplied to the on-site outflow hot water pipe 83. When the hot water is supplied from the upper portion in the hot water storage tank 72, the water supplied from the outside of the hot water supply system 1b is supplied to the lower portion of the hot water storage tank 72 through the water supply pipe h7d. Thus, in the hot water storage tank 72, part of stored supply water and hot water is replaced with new supply water and new hot water.

The solar water heating system 70 includes a solar heat collector 75, a heat exchanger 74 that is disposed in the hot water storage tank 72, a circulation pipe h7a, and a circulation pipe h7c, and a circulation pump 73 is disposed in the circulation pipe h7a. In the solar water heating system 70, a circulation circuit is formed using the solar heat collector 75, the circulation pipe h7a, the circulation pump 73, the heat exchanger 74, and the circulation pipe h7c, and heat medium circulates in the circulation circuit. The heat medium is, for example, water, and may be antifreeze fluid such as propylene glycol.

The hot water storage unit 71 includes a controller 76. The controller 76 controls the circulation pump 73 so that the heat medium circulates in the circulation circuit. The heat medium collects heat in the solar heat collector 75, circulates in the circulation circuit, and reaches the heat exchanger 74. After the heat is rejected in the heat exchanger 74, the heat medium circulates in the circulation circuit, and returns to the solar heat collector 75.

When the supply water stored in the hot water storage tank 72 is heated in the heat exchanger 74, the specific gravity of the supply water is reduced, and the supply water is moved to the upper portion in the hot water storage tank 72. Thus, the hot water with high temperature is stored in the upper portion in the hot water storage tank 72.

The water supplied from the on-site water supply pipe 90 to the hot water storage tank 72 is heated in the heat exchanger 74, and the heated hot water is moved to the upper portion in the hot water storage tank 72 and is then supplied to the on-site outflow hot water pipe 83. In this process, the power is consumed only by the circulation pump 73 and the controller 76. Thus, the solar water heating system 70 is a system excellent in the energy saving performance.

A temperature sensor T7a is disposed on an upper portion in the hot water storage tank 72, and a plurality of temperature sensors T7a, T7b, and T7c are disposed on a side surface in the hot water storage tank 72 at predetermined intervals in an up-down direction. Provision of the plurality of temperature sensors T7a, T7b, and T7c improves the accuracy of detecting the temperature of supply water and the temperature of hot water in the hot water storage tank 72.

The temperature sensor T7a is positioned near a connection port between the outflow hot water pipe h7e and the hot water storage tank 72. Thus, the temperature detected by the temperature sensor T7a is approximately the same as the temperature of water to be supplied as hot water that is supplied from the outflow hot water pipe h7e.

The controller 76 monitors a detection value of the temperature sensor T7a, a detection value of the temperature sensor T7b, and a detection value of the temperature sensor T7c, and communicates with the controller 108 in the mixed hot water delivery system 100 to transmit the detection value of the temperature sensor T7a to the controller 108 in the mixed hot water delivery system 100.

The temperature of the hot water stored in the upper portion in the hot water storage tank 72 depends on collectable solar heat, and is increased up to about 50 to 70 degrees C in sunny weather during the summer months. However, the temperature of the hot water during the winter months may be about 30 to 40 degrees C over a long period of time. In rainy or cloudy weather during the summer months, the hot water temperature of about 30 to 40 degrees C may be continued. An additional heating device may be required to increase the hot water temperature of about 30 to 40 degrees C up to a temperature substantially the same as that of the hot water in sunny weather during the summer months. For example, in the hot water stored at the temperature of about 40 degrees C for about one to two weeks, the breeding of bacteria such as legionella occurs at a high probability. Accordingly, when the temperature of the hot water stored in the hot water storage tank 72 stays around 40 degrees C, and the stored supply water and hot water are not replaced with new supply water and new hot water without being supplied from the hot water storage tank 72 for about one to two weeks, the breeding of bacteria occurs in the hot water stored in the hot water storage tank 12 at a high probability, and the hot water in which the breeding of bacteria such as legionella occurs at a high probability may be supplied through the on-site outflow hot water pipe 83. To prevent this, a bacterial eliminator may need to be added. Thus, adding such a heating device or such a bacterial eliminator may cause cost increase in the system.

The mixed hot water delivery system 100 includes the inflow water flow sensor F6b that detects a flow volume of the hot water flowing in the inflow water pipe h5c from the solar water heating system 70, to respond to the temperature variation, to suppress the breeding of bacteria, or for other reasons.

The mixed hot water delivery system 100 includes the controller 108. The controller 108 is, for example, a microprocessor, and includes a target temperature determination unit 682, a memory unit 583, and a timing unit 683. The controller 68 communicates with an input device 581, and communicates with the controller 76 in the solar water heating system 70.

First, the target temperature determination unit 682 sets a first target temperature to a first low temperature (step S1). The first low temperature is a temperature set based on a desired temperature, and is the same temperature as the desired temperature, for example. When the desired temperature is 40 degrees C, the first low temperature may be 40 degrees C. The controller 108 acquires from the controller 76 of the solar water heating system 70 and monitors a detection value of the temperature sensor T7a that is located at the upper portion in the hot water storage tank 72 of the solar water heating system 70, and determines whether the detection value of the temperature sensor T7a is equal to or lower than a reference temperature T₀ (step S12). When the controller 108 determines that the detection value of the temperature sensor T7a is equal to or lower than the reference temperature T₀ (S12: YES), the controller 108 measures elapsed time during which the detection value of the temperature sensor T7a is equal to or lower than the reference temperature T₀ (step S3). The reference temperature T₀ is determined based on a temperature of the hot water stored in the hot water storage tank 72 of the solar water heating system 70 in sunny weather during the summer months, for example, a temperature that can be relatively easily controlled when the hot water is supplied, or, for example, a temperature at which the breeding of bacteria such as legionella may occur. The reference temperature T₀ is, for example, 50 degrees C.

While the controller 108 measures the elapsed time during which the detection value of the temperature sensor T7a is equal to or lower than the reference temperature To, the controller 108 accumulates the detection values of the inflow water flow sensor F6b to calculate accumulated flow volume (step S4), and determines whether the accumulated flow volume is equal to or smaller than a determination flow volume F₀ (step S5). Here, the accumulated flow volume is an amount of outflow hot water supplied from the solar water heating system 70 while the temperature of the hot water flowing in the inflow water pipe h5c is equal to or lower than the reference temperature T₀. The determination flow volume F₀ is, for example, 50L.

When the controller 108 determines that the accumulated flow volume is equal to or smaller than a determination flow volume Fo (S5: YES), the controller 108 determines whether the elapsed time is equal to or longer than a determination time t₀ (step S6). The determination time t₀ is determined based on a time when supply water and hot water stored in the hot water storage tank 72 are replaced with new supply water and new hot water or a time when the breeding of bacteria such as legionella may occur. The determination time t₀ is, for example, one week.

When the controller 108 determines that the elapsed time is equal to or longer than the determination time to (S6: YES), the target temperature determination unit 682 sets the first target temperature to the first high temperature (step S7). This is because the hot water in the hot water storage tank 72 of the solar water heating system 70 is not suitable to be used for the first mixed water obtained by mixing at the first low temperature. For example, this is because since the hot water in the hot water storage tank 72 of the solar water heating system 70 has a temperature at which the breeding of bacteria such as legionella may occur and also an amount of outflow hot water from the hot water storage tank 72 is small, the supply water and the hot water stored in the hot water storage tank 72 are not replaced with new supply water and new hot water, and therefore the hot water in the hot water storage tank 72 should be subjected to heating treatment or sterilization treatment.

When the controller 108 determines that the accumulated flow volume exceeds the determination flow volume Fo (S5: NO), the controller 108 clears the measured elapsed time (step S8), clears the calculated accumulated flow volume (step S9), and returns to the process to step S12. When the controller 108 determines that the detection value exceeds the reference temperature To (S12: NO), the controller 108 also clears the measured elapsed time (step S8), clears the calculated accumulated flow volume (step S9), and returns to the process to step S12. When the controller 108 determines that the elapsed time is below the determination time to (S6: NO), the controller 108 returns to the process to step S12. Then, steps S12 to S6 are repeated.

Through the above-described control flow, the hot water supply system 1b can accurately detect whether the hot water in the hot water storage tank 72 of the solar water heating system 70 is suitable to be used for the first mixed water obtained by mixing at the first low temperature, and can set the first target temperature to the first high temperature only when the first mixed water is not suitable for use at the first low temperature. As a specific example, the hot water supply system 1b can accurately detect whether the breeding of bacteria such as legionella occurs in the hot water in the hot water storage tank 72 of the solar water heating system 70 at a high probability, and can set the first target temperature to the first high temperature only when the breeding of bacteria such as legionella occurs at a high probability.

According to the hot water supply system 1b according to Embodiment 3, the temperature sensor for detecting the temperature of the hot water flowing in the inflow water pipe h5c does not need to be provided in the mixed hot water delivery system 100. Accordingly, the cost of the mixed hot water delivery system 100 can be reduced.

### Embodiment 4

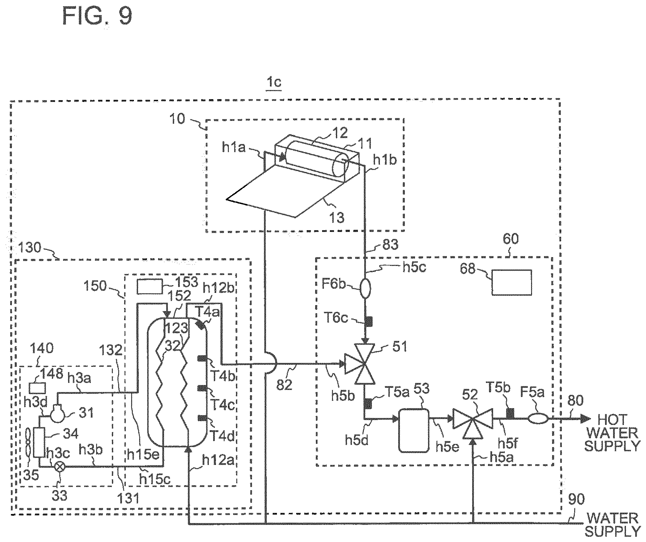

A hot water supply system according to Embodiment 4 will be described with reference to FIG. 9. FIG. 9 is a schematic diagram illustrating a schematic configuration of a hot water supply system 1c according to Embodiment 4. The hot water supply system 1c according to Embodiment 4 is different from the hot water supply system 1a according to Embodiment 2 in a heat pump hot water supply system 130. The hot water supply system 1c according to Embodiment 4 will be described hereinbelow focusing on the difference from the hot water supply system 1a according to Embodiment 2.

The heat pump hot water supply system 130 includes a heat pump unit 140 and a heat storage unit 150. The heat pump unit 140 and the heat storage unit 150 are connected to each other through an on-site refrigerant pipe 131 and an on-site refrigerant pipe 132. In the heat pump hot water supply system 130, a refrigerant circuit is formed by the compressor 31, the refrigerant pipe h3a, the on-site refrigerant pipe 132, a refrigerant pipe h15e, the heat exchanger 32, a refrigerant pipe h15c, the on-site refrigerant pipe 131, the refrigerant pipe h3b, the expansion mechanism 33, the refrigerant pipe h3c, the air heat exchanger 34, and the refrigerant pipe h3d.

The heat storage unit 150 includes a heat storage tank 152. The heat storage tank 152 is filled with the heat storage medium, and the heat exchangers 32 and 123 are disposed in the heat storage tank 152. The heat storage medium is, for example, a sensible heat-storage material such as water, or a latent heat-storage material such as paraffin.

The heat storage unit 150 further includes an outflow hot water pipe h12b and a water supply pipe h12a. The water supplied from the on-site water supply pipe 90 through the water supply pipe h12a absorbs heat from the heat storage medium therearound in the heat exchanger 123 to become the water to be supplied as hot water, and is then supplied from the on-site outflow hot water pipe 82 through the outflow hot water pipe h12b.

When the water to be supplied as hot water is supplied from the outflow hot water pipe h12b, the temperature of the heat storage medium is decreased, and an amount of heat accumulated in the heat storage tank 152 is also reduced.

The heat storage unit 150 includes a controller 153. The controller 153 is, for example, a microprocessor. When the amount of heat accumulation is lower than a predetermined amount, the controller 153 performs the boiling operation. When the boiling operation is performed, the refrigerant circulates in the refrigerant circuit, and rejects heat in the heat exchanger 32 to heat the heat storage medium therearound. Thus, the amount of heat accumulated in the heat storage tank 152 is increased.

The controller 153 monitors detection values of the temperature sensors T4a, T4b, T4c, and T4d, and calculates the amount of heat accumulation in the hot water storage tank 152 based on the detection values. When the calculated amount of heat accumulation exceeds the predetermined amount and the detection value of the temperature sensor T4a exceeds a predetermined temperature, the controller 153 finishes the boiling operation.

The predetermined temperature of the temperature sensor T4a that is a reference when the boiling operation is finished is 60 degrees C + ε or higher. The ε represents the degree of allowance, and is, for example, 10 degrees C. The temperature of water to be supplied as hot water that is heated by the heat exchanger 123 and is supplied from the outflow hot water pipe h12b easily becomes higher than that of the hot water that is supplied from the solar water heating system 10 to the on-site outflow hot water pipe 83, and becomes, for example, 60 degrees C or higher at which bacteria such as legionella can be killed. When the latent heat-storage material is used for the heat storage medium, a melting point of the latent heat-storage material is preferably, for example, 60 degrees C or higher at which bacteria such as legionella can be killed, and is, for example, 65 degrees C. For example, the temperature of water to be supplied as hot water that is heated by the heat exchanger 123 and is supplied from the outflow hot water pipe h12b is, for example, 65 degrees C to easily become higher than that of the hot water that is supplied from the solar water heating system 10 to the on-site outflow hot water pipe 83.

In the hot water supply system 1c according to Embodiment 4, a boiling pump for circulating the heat storage medium is not required. Accordingly, the cost of the hot water supply system 1c can be reduced.

Regarding the determination using the detection values of the inflow water temperature sensor T6c, the inflow water flow sensor T6b, and the other sensors and the reference values, the reference values used for the determination can involve certain extra values based on the common sense of those skilled in the art. In other words, in the present determination, it is determined whether the detection value substantially corresponds to the reference value.

In the above-described embodiments, an example in which a heat pump hot water supply system is adopted as a second water heating system for preparing the hot water by heating water using electric power energy has been described. However, the present invention is not limited to such an example. A configuration in which the hot water is prepared by an electric heater may be adopted as the second water heating system. Adopting a configuration using the electric heater enables a configuration of the second water heating system to be simplified, resulting in reduction of the cost of the second water heating system. In the above-described embodiments, an example in which a hot water supply system in which a heat pump hot water supply system, a solar water heating system and a mixed hot water delivery system are connected to one another is adopted has been described. However, the present invention is not limited to such an example. As the hot water supply system, a configuration may be adopted in which the heat pump hot water supply system and the mixed hot water delivery system are connected to each other so that the mixed hot water delivery system can receive the hot water from the solar water heating system that is disposed outside the hot water supply system. As the hot water supply system, a configuration may be adopted in which the solar water heating system and the mixed hot water delivery system are connected to each other so that the mixed hot water delivery system can receive the water to be supplied as hot water from the heat pump hot water supply system that is disposed outside the hot water supply system. As the hot water supply system, a configuration may be adopted in which the mixed hot water delivery system is provided so that the mixed hot water delivery system can receive the hot water from the solar water heating system that is disposed outside the hot water supply system and the water to be supplied as hot water from the heat pump hot water supply system that is disposed outside the hot water supply system.

### REFERENCE SIGNS LIST

- 1, 1a, 1b, 1c: Hot water supply system
- 10, 70: Solar water heating system
- 12, 72: Hot water storage tank
- 20: Heat pump hot water supply system
- 30, 140: Heat pump unit
- 40: Hot water storage unit
- 41: Hot water storage tank
- 150: Heat storage unit
- 152: Heat storage tank
- 32, 123: Heat exchanger
- h3a, h3b, h3c, h3d, 131, 132, h15c, h15e: Refrigerant pipe
- 50: Mixed hot water delivery system
- 51: First mixing valve
- 52: Second mixing valve
- 53: Hot water storage tank
- T5a: First temperature sensor
- T5b: Second temperature sensor
- T6c: Inflow water temperature sensor
- F6b: Inflow water flow sensor
- T7a, T7b, T7c: Temperature sensor
- 48, 58, 68, 76, 153: Controller
- 582, 682: Target temperature determination unit
- 583: Memory unit
- 683: Timing unit

## Claims

1. A hot water supply system (1, 1a, 1b, 1c) comprising a first water heating system (10, 70) and a second heating system (20, 130), and configured to mix first hot water supplied by the first water heating system (10, 70) and second hot water supplied by the second water heating system (20, 130), the second hot water having a temperature higher than a temperature of the first hot water to supply the mixed hot water,
the hot water supply system (1, 1a, 1b, 1c) comprising:
- a first mixed hot water generating unit (51) configured to generate first mixed hot water obtained by mixing the first hot water and the second hot water at a first mixing ratio;
- a second mixed hot water generating unit (52) configured to generate second mixed hot water obtained by mixing supply water into the first mixed hot water at a second mixing ratio;
- a second temperature detecting unit (T5b) configured to detect a temperature of the second mixed hot water;
- a second mixed hot water temperature setting unit configured to set a temperature of the second mixed hot water; and
- a second changing unit configured to change the second mixing ratio based on the set temperature by the second mixed hot water temperature setting unit and the detected temperature by the second temperature detecting unit (T5b),
wherein
the hot water supply system (1, 1a, 1b, 1c) supplies the second mixed hot water,
**characterized by** further comprising:
- a first temperature detecting unit (T5a) configured to detect a temperature of the first mixed hot water;
- a first mixed hot water temperature setting unit configured to set a temperature of the first mixed hot water; and
- a first changing unit configured to change the first mixing ratio based on the set temperature by the first mixed hot water temperature setting unit and the detected temperature by the first temperature detecting unit (T5a).

2. The hot water supply system (1, 1a, 1b, 1c) of claim 1,
wherein the second mixed hot water temperature setting unit is configured to receive hot water supply temperature information indicating a hot water supply temperature, and set a temperature of the second mixed hot water based on the received hot water supply temperature information.

3. The hot water supply system (1, 1a, 1b, 1c) of claim 1 or 2,
further comprising a memory unit (583) configured to store a hot water temperature, wherein
the first mixed hot water temperature setting unit is configured to set the temperature of the first mixed hot water based on the hot water temperature stored in the memory unit (583).

4. The hot water supply system (1, 1a, 1b, 1c) of claim 1 or 2,
further comprising a memory unit (583) configured to store a hot water temperature, wherein
the first mixed hot water temperature setting unit is configured to set a first low temperature based on the received hot water supply temperature information, set a first high temperature that is higher than the first low temperature based on the hot water temperature stored in the memory unit (583), set the first high temperature as a temperature of the first mixed hot water when the first hot water is not suitable to be used for the first mixed water of the first low temperature obtained by mixing, and set the first low temperature as a temperature of the first mixed hot water when the first hot water is suitable to be used for the first mixed water of the first low temperature obtained by mixing.

5. The hot water supply system (1, 1a, 1b, 1c) of any one of claims 1 to 4, further comprising a hot water storage tank (53) configured to store the first mixed hot water,
wherein
the second mixed hot water generating unit (52) is configured to mix the first mixed hot water stored in the hot water storage tank (53) and the supply water.

6. The hot water supply system (1a, 1c) of claim 1 or 2,
further comprising:
- a flow volume detecting unit (F6b) configured to detect a flow volume of the first hot water;
- a hot water temperature acquisition unit (T6c) configured to acquire a hot water temperature of the first hot water;
- a memory unit (583) configured to store a reference temperature for the hot water temperature of the first hot water, a reference flow volume for an accumulated flow volume obtained by accumulating detection values of the flow volume detecting unit (F6b), and a determination time; and
- a timing unit (683) configured to measure an elapsed time during which the accumulated flow volume is equal to or lower than the reference flow volume, the accumulated flow volume being obtained after the hot water temperature acquired by the hot water temperature acquisition unit (T6c) is substantially equal to or lower than the reference temperature,
wherein
the first mixed hot water temperature setting unit (682) is configured to set the hot water temperature having a high antibacterial effect when the elapsed time is substantially equal to or longer than the determination time.

7. The hot water supply system (1a, 1c) of claim 6,
wherein the hot water temperature acquisition unit (T6c) is a temperature detector (T6c) positioned upstream of the first mixed hot water generating unit (51).

8. The hot water supply system (1, 1a, 1b, 1c) of any one of claims 1 to 7,
wherein the first water heating system (10, 70) is a solar water heating system (10, 70) generating the first hot water using solar heat.

9. The hot water supply system (1, 1a, 1b, 1c) of any one of claims 1 to 8,
wherein the second water heating system (20, 130) is a heat pump hot water supply system (20, 130) generating the second hot water using a refrigerant circuit.

10. The hot water supply system (1c) of claim 9,
wherein the heat pump hot water supply system (130) includes a heat storage unit (150) connected to a heat pump unit (140) by a refrigerant pipe, and
the heat storage unit (150) includes a heat exchanger (32) and a heat storage medium.

11. The hot water supply system (1, 1a, 1b, 1c) of claim 3,
wherein the second mixed hot water generating unit (52) is configured to mix the supply water into the first mixed hot water having the hot water temperature stored in the memory unit (583), and generate the second mixed water having a temperature lower than the hot water temperature stored in the memory unit (583).

12. A hot water supply method in which hot water supply is conducted by supplying hot water obtained by mixing first hot water supplied by a first water heating system (10, 70) and second hot water supplied by a second water heating system (20, 130), the second hot water having a temperature higher than a temperature of the first hot water,
the hot water supply method comprising:
- a first mixed hot water generating step of generating a first mixed hot water obtained by mixing the first hot water and the second hot water at a first mixing ratio;
- a water supplying step of supplying water;
- a second mixed hot water generating step of generating second mixed hot water obtained by mixing supply water into the first mixed hot water at a second mixing ratio;
- a second temperature detecting step of detecting a temperature of the second mixed hot water;
- a second mixed hot water temperature setting step of setting the temperature of the second mixed hot water,
- a second changing step of changing the second mixing ratio based on the set temperature of the second mixed hot water and the detected temperature of the second mixed hot water; and
- a hot water supplying step of supplying the second mixed hot water, **characterized by** further comprising:
- a first temperature detecting step of detecting a temperature of the first mixed hot water;
- a first mixed hot water temperature setting step of setting the temperature of the first mixed hot water; and
- a first changing step of changing the first mixing ratio based on the set temperature of the first mixed hot water and the detected temperature of the first mixed hot water.

## Patentansprüche

1. Warmwasserversorgungssystem (1, 1a, 1b, 1c), welches ein erstes Wasserheizsystem (10, 70) und ein zweites Wasserheizsystem (20, 130) aufweist und dazu konfiguriert ist, ein erstes Warmwasser, das vom ersten Wasserheizsystem (10, 70) bereitgestellt wird, mit einem zweiten Warmwasser, das vom zweiten Wasserheizsystem (20, 130) bereitgestellt wird, zu vermischen, wobei das zweite Warmwasser eine Temperatur aufweist, die höher ist, als eine Temperatur des ersten Warmwassers zur Bereitstellung des Mischwarmwassers, wobei das Warmwasserversorgungssystem (1, 1a, 1b, 1c), Folgendes aufweist:
- eine erste Warmwassererzeugungseinheit (51), welche dazu konfiguriert ist, ein erstes Mischwarmwasser, das durch Vermischen des ersten Warmwasser mit dem zweiten Warmwasser gemäß einem ersten Mischverhältnis erzielt wird, zu erzeugen;
- eine zweite Warmwassererzeugungseinheit (52), welche dazu konfiguriert ist, ein zweites Mischwarmwasser, das durch Mischen von Speisewasser in das erste Mischwarmwasser gemäß einem zweiten Mischverhältnis erzielt wird, zu erzeugen;
- eine zweite Temperaturerfassungseinheit (T5b), welche dazu konfiguriert ist, eine Temperatur des zweiten Mischarmwassers zu erfassen;
- eine zweite Mischwarmwasser-Temperatureinstelleinheit, welche dazu konfiguriert ist, eine Temperatur des zweiten Mischwarmwassers einzustellen; und
- eine zweite Änderungseinheit, welche dazu konfiguriert ist, das zweite Mischverhältnis, das auf der von der zweiten Mischwarmwasser-Temperatureinstellheit eingestellten Temperatur und der von der zweiten Temperaturerfassungseinheit (T5b) erfassten Temperatur basiert, zu ändern, wobei das Warmwasserversorgungssytem (1, 1a, 1b, 1c) das zweite Mischwarmwasser bereitstellt, **dadurch gekennzeichnet, dass** es darüber hinaus Folgendes aufweist:
- eine erste Temperaturerfassungseinheit (T5a), welche dazu konfiguriert ist, eine Temperatur des ersten Mischarmwassers zu erfassen;
- eine erste Mischwarmwasser-Temperatureinstelleinheit, welche dazu konfiguriert ist, eine Temperatur des ersten Mischwarmwassers einzustellen; und
- eine erste Änderungseinheit, welche dazu konfiguriert ist, das erste Mischverhältnis, das auf der von der ersten Mischwarmwasser-Temperatureinstellheit eingestellten Temperatur und der von der ersten Temperaturerfassungseinheit (T5a) erfassten Temperatur basiert, zu ändern.

2. Warmwasserversorgungssystem (1, 1a, 1b, 1c) gemäß Anspruch 1, wobei die zweite Mischwarmwasser-Temperatureinstelleinheit dazu konfiguriert ist, Informationen über die Warmwasserversorgungstemperatur zu empfangen, die Angaben über eine Warmwassertemperatur enthalten, und eine Temperatur des zweiten Mischwarmwassers basierend auf den empfangenen Informationen über die Warmwasserversorgungstemperatur einzustellen.

3. Warmwasserversorgungssystem (1, 1a, 1b, 1c) gemäß Anspruch 1 oder 2, welches darüber eine Speichereinheit (583) aufweist, die dazu konfiguriert ist, basierend auf der in der Speichereinheit (583) gespeicherten Warmwassertemperatur die Temperatur des ersten Mischwarmwassers einzustellen.

4. Warmwasserversorgungssystem (1, 1a, 1b, 1c) gemäß Anspruch 1 oder 2, welches darüber hinaus eine Speichereinheit (583) aufweist, die zur Speicherung einer Warmwassertemperatur konfiguriert ist, wobei die erste Mischwarmwasser-Temperatureinstelleinheit dazu konfiguriert ist, basierend auf den empfangenen Informationen über die Warmwasserversorgungstemperatur eine erste niedrige Temperatur einzustellen, basierend auf der in der Speichereinheit (583) gespeicherten Warmwassertemperatur eine erste hohe Temperatur, die höher als die erste niedrige Temperatur ist, einzustellen, die erste hohe Temperatur als eine Temperatur des ersten Mischwarmwassers einzustellen, wenn das erste Warmwasser nicht für eine Nutzung als erstes Mischwarmwasser, das die erste, durch Mischen erzielte niedrige Temperatur aufweist, geeignet ist, und die erste niedrige Temperatur als eine Temperatur des ersten Mischwarmwassers, wenn das erste warme Wasser für eine Nutzung als erstes Mischwarmwasser mit der ersten, durch Mischen erzielten niedrigen Temperatur geeignet ist, und die erste niedrige Temperatur als eine Temperatur des ersten Mischwarmwasser einzustellen, wenn das erste Warmwasser zur Nutzung als erstes Mischwasser, das die durch Mischen erzielte niedrige Temperatur aufweist, geeignet ist.

5. Warmwasserversorgungssystem (1, 1a, 1b, 1c) gemäß einem der Ansprüche 1 bis 4, welches darüber hinaus einen Warmwasserspeichertank (53) aufweist, welcher dazu konfiguriert ist, das erste Mischwarmwasser zu speichern, wobei die zweite Warmwassererzeugungseinheit (52) dazu konfiguriert ist, das im Warmwasserspeichertank (53) gespeicherte erste Mischwarmwasser zu mischen und das Wasser bereitzustellen.

6. Warmwasserversorgungssystem (1, 1a, 1b, 1c) gemäß Anspruch 1 oder 2, welches darüber hinaus Folgendes aufweist:
- eine Durchflussmengen-Erfassungseinheit (F6b), welche dazu konfiguriert ist, eine Durchflussmenge des ersten Warmwassers zu erfassen;
- eine Warmwassertemperatur-Erfassungseinheit (T6c), welche dazu konfiguriert ist, eine Warmwassertemperatur des ersten Warmwassers zu erfassen;
- eine Speichereinheit (583), welche dazu konfiguriert ist, eine Bezugstemperatur für die Warmwassertemperatur des ersten Warmwassers, eine Bezugsdurchflussmenge für eine akkumulierte Durchflussmenge, die durch die Akkumulierung von Erfassungswerten der Durchflussmengen-Erfassungseinheit erzielt wird, und einen Bestimmungszeitraum zu speichern; und
- eine Zeitsteuerungseinheit (683), welche dazu konfiguriert ist, eine verstrichene Zeit, während derer die akkumulierte Durchflussmenge der Bezugsdurchflussmenge entspricht oder niedriger als diese ist, zu messen, wobei die akkumulierte Durchflussmenge erzielt wird, nachdem die von der Warmwassertemperatur-Erfassungseinheit (T6c) erfasste Warmwassertemperatur im Wesentlichen der Bezugstemperatur entspricht oder niedriger als diese ist, wobei die erste Mischwarmwassertemperatur-Einstelleinheit (682) dazu konfiguriert ist, die Warmwassertemperatur einzustellen, die eine hohe antibakterielle Wirkung aufweist, wenn die verstrichene Zeit im Wesentlichen dem Bestimmungszeitraum entspricht oder kürzer als dieser ist.

7. Warmwasserversorgungssystem (1a, 1c) gemäß Anspruch 6, wobei die Warmwassertemperatur-Erfassungseinheit (T6c) ein Temperaturfühler (T6c) ist, der stromaufwärts der ersten Warmwassererzeugungseinheit (51) angeordnet ist.

8. Warmwasserversorgungssystem (1, 1a, 1b, 1c) gemäß einem der Ansprüche 1 bis 7, wobei das erste Wasserheizsystem (10, 70) ein Solarwasserheizsystem (10, 70) ist, welches das erste Warmwasser unter Nutzung von Sonnenwärme erzeugt.

9. Warmwasserversorgungssystem (1, 1a, 1b, 1c) gemäß einem der Ansprüche 1 bis 8, wobei das zweite Wasserheizsystem (20, 130) ein Wärmepumpen-Wasserheizsystem (20,130) ist, welches das zweite Warmwasser durch Einsatz eines Kältemittelkreislaufs erzeugt.

10. Warmwasserversorgungssystem (1c) gemäß Anspruch 9, wobei das Wärmepumpen-Wasserheizsystem (130) eine Wärmespeichereinheit (150) aufweist, die durch eine Kältemittelleitung mit einer Wärmepumpeneinheit (140) verbunden ist, und die Wärmespeichereinheit (150) einen Wärmetauscher (32) und ein Wärmespeichermedium aufweist.

11. Warmwasserversorgungssystem (1, 1a, 1b, 1c) gemäß Anpruch 3, wobei die zweite Warmwassererzeugungseinheit (52) dazu konfiguriert ist, das Speisewasser in das erste Mischwarmwasser, das die in der Speichereinheit (583) gespeicherte Warmwassertemperatur aufweist, zu mischen, und das zweite Mischwarmwasser, welches eine Temperatur aufweist, die niedriger als die in der Speichereinheit (583) gespeicherte Warmwassertemperatur ist, zu erzeugen.

12. Warmwasserversorgungsverfahren, bei dem die Warmwasserversorgung durchgeführt wird, indem Warmwasser, das durch Vermischen von durch ein erstes Wasserheizsystem (10, 70) bereitgestelltem erstem Warmwasser mit durch ein zweites Wasserheizsystem (20, 130) bereitgestelltem zweitem Warmwasser erzielt wird, bereitgestellt wird, wobei das zweite Warmwasser eine höhere Temperatur als das erste Warmwasser aufweist, und
das Warmwasserversorgungsverfahren Folgendes aufweist:
- einen ersten Schritt zur Warmwassererzeugung, bei dem ein erstes Mischwarmwasser durch Mischen des ersten Warmwassers mit dem zweiten Warmwasser gemäß einem ersten Mischverhältnis erzielt wird,
- einen Schritt zur Wasserspeisung, bei dem Wasser gespeist wird;
- einen zweiten Schritt zur Warmwassererzeugung, bei dem ein zweites Mischwarmwasser durch Mischen von Speisewasser in das erste Mischwarmwasser gemäß einem zweiten Mischverhältnis erzielt wird;
- einen zweiten Schritt zur Temperaturerfassung, welcher darin besteht, eine Temperatur des zweiten Mischwarmwassers zu erfassen;
- einen zweiten Schritt zur Warmwassertemperatureinstellung, der darin besteht, die Temperatur des zweiten Mischwarmwassers einzustellen,
- einen zweiten Schritt zu Änderung des zweiten Mischverhältnisses basierend auf der eingestellten Temperatur des zweiten Mischwarmwassers und der erfassten Temperatur des zweiten Mischwarmwasser; und
- einen Schritt zur Warmwassereinspeisung, der darin besteht, das zweite Mischwarmwasser einzuspeisen,
**dadurch gekennzeichnet, dass** er darüber hinaus Folgendes aufweist:
- eine ersten Schritt zur Temperaturerfassung, welcher darin besteht, eine Temperatur des ersten Mischwarmwassers zu erfassen;
- einen ersten Schritt zur Warmwassertemperatureinstellung, der darin besteht, die Temperatur des ersten Mischwarmwassers einzustellen,
- einen ersten Schritt zu Änderung des ersten Mischverhältnisses basierend auf der eingestellten Temperatur des ersten Mischwarmwassers und der erfassten Temperatur des ersten Mischwarmwasser.

## Revendications

1. Système d'alimentation en eau chaude (1, 1a, 1b, 1c) comprenant un premier système de chauffage d'eau (10, 70) et un second système de chauffage (20, 130), et configuré pour mélanger une première eau chaude alimentée par le premier système de chauffage d'eau (10, 70) et une seconde eau chaude alimentée par le second système de chauffage d'eau chaude (20, 130), la seconde eau chaude ayant une température supérieure à une température de la première eau chaude pour alimenter l'eau chaude mélangée,
le système d'alimentation en eau chaude (1, 1a, 1b, 1c) comprenant :
- une première unité de génération d'eau chaude mélangée (51) configurée pour générer une première eau chaude mélangée obtenue en mélangeant la première eau chaude et la seconde eau chaude à un premier rapport de mélange ;
- une seconde unité de génération d'eau chaude mélangée (52) configurée pour générer une seconde eau chaude mélangée obtenue en mélangeant de l'eau d'alimentation jusque dans la première eau chaude mélangée à un second rapport de mélange ;
- une seconde unité de détection de température (T5b) configurée pour détecter une température de la seconde eau chaude mélangée ;
- une seconde unité de réglage de température d'eau chaude mélangée configurée pour régler une température de la seconde eau chaude mélangée ; et
une seconde unité de changement configurée pour changer le second rapport de mélange sur la base de la température réglée par la seconde unité de réglage de température d'eau chaude mélangée et de la température détectée par la seconde unité de détection de température (T5b),
dans lequel
le système d'alimentation en eau chaude (1, 1a, 1b, 1c) alimente la seconde eau chaude mélangée, **caractérisé en ce qu'**il comprend en outre :
- une première unité de détection de température (T5a) configurée pour détecter une température de la première eau chaude mélangée ;
- une première unité de réglage de température d'eau chaude mélangée configurée pour régler une température de la première eau chaude mélangée ; et
- une première unité de changement configurée pour changer le premier rapport de mélange sur la base de la température réglée par la première unité de réglage de température d'eau chaude mélangée et de la température détectée par la première unité de détection de température (T5a).

2. Système d'alimentation en eau chaude (1, 1a, 1b, 1c) selon la revendication 1,
dans lequel la seconde unité de réglage de température d'eau chaude mélangée est configurée pour recevoir une information de température d'alimentation en eau chaude indiquant une température d'alimentation en eau chaude, et pour régler une température de la seconde eau chaude mélangée sur la base de l'information de température d'alimentation en eau chaude reçue.

3. Système d'alimentation en eau chaude (1, 1a, 1b, 1c) selon la revendication 1 ou 2,
comprenant en outre une unité de mémoire (583) configurée pour stocker une température d'eau chaude,
dans lequel
la première unité de réglage de température d'eau chaude mélangée est configurée pour régler la température de la première eau chaude mélangée sur la base de la température d'eau chaude stockée dans l'unité de mémoire (583).

4. Système d'alimentation en eau chaude (1, 1a, 1b, 1c) selon la revendication 1 ou 2,
comprenant en outre une unité de mémoire (583) configurée pour stocker une température d'eau chaude,
dans lequel
la première unité de réglage de température d'eau chaude mélangée est configurée pour régler une première température basse sur la base de l'information de température d'alimentation en eau chaude reçue, pour régler une première température élevée qui est supérieure à la première température basse sur la base de la température d'eau chaude stockée dans l'unité de mémoire (583), pour régler la première température élevée à titre de température de la première eau chaude mélangée quand la première eau chaude n'est pas adaptée pour être utilisée pour la première eau mélangée de la première température basse obtenue en mélangeant, et pour régler la première température basse à titre de température de la première eau chaude mélangée quand la première eau chaude mélangée est adaptée pour être utilisée pour la première eau mélangée de la première température basse obtenue en mélangeant.

5. Système d'alimentation en eau chaude (1, 1a, 1b, 1c) selon l'une quelconque des revendications 1 à 4,
comprenant en outre un réservoir de stockage d'eau chaude (53) configuré pour stocker la première eau chaude mélangée,
dans lequel
la seconde unité de génération d'eau chaude mélangée (52) est configurée pour mélanger la première eau chaude mélangée stockée dans le réservoir d'eau chaude (53) et l'eau d'alimentation.

6. Système d'alimentation en eau chaude (1a, 1c) selon la revendication 1 ou 2,
comprenant en outre :
- une unité de détection de volume d'écoulement (F6b) configurée pour détecter un volume d'écoulement de la première eau chaude ;
- une unité d'acquisition de température d'eau chaude (T6c) configurée pour acquérir une température d'eau chaude de la première eau chaude ;
- une unité de mémoire (583) configurée pour stocker une température de référence pour la température d'eau chaude de la première eau chaude, un volume d'écoulement de référence pour un volume d'écoulement accumulé obtenu en accumulant des valeurs de détection de l'unité de détection de volume d'écoulement (F6b), et un temps de détermination ; et
- une unité de temporisation (683) configurée pour mesurer un laps de temps durant lequel le volume d'écoulement accumulé est égal ou inférieur au volume d'écoulement de référence, le volume d'écoulement accumulé étant obtenu après que la température d'eau chaude acquise par l'unité d'acquisition de température d'eau chaude (T6c) est sensiblement égale ou inférieure à la température de référence,
dans lequel
la première unité de réglage de température d'eau chaude mélangée (682) est configurée pour régler la température d'eau chaude avec un effet antibactérien élevé quand le laps de temps est sensiblement égal ou supérieur au temps de détermination.

7. Système d'alimentation en eau chaude (1a, 1c) selon la revendication 6,
dans lequel l'unité d'acquisition de température d'eau chaude (T6c) est un détecteur de température (T6c) positionné en amont de la première unité de génération d'eau chaude mélangée (51).

8. Système d'alimentation en eau chaude (1, 1a, 1b, 1c) selon l'une quelconque des revendications 1 à 7,
dans lequel le premier système de chauffage d'eau (10, 70) est un système de chauffage d'eau solaire (10, 70) générant la première eau chaude en utilisant de la chaleur solaire.

9. Système d'alimentation en eau chaude (1, 1a, 1b, 1c) selon l'une quelconque des revendications 1 à 8,
dans lequel le second système de chauffage d'eau (20, 130) est un système d'alimentation en eau chaude à pompe à chaleur (20, 130) générant la seconde eau chaude en utilisant un circuit de réfrigérant.

10. Système d'alimentation en eau chaude (1c) selon la revendication 9,
dans lequel le système d'alimentation en eau chaude à pompe à chaleur (130) inclut une unité de stockage de chaleur (150) connectée à une unité de pompe à chaleur (140) par un tube à réfrigérant, et
l'unité de stockage de chaleur (150) inclut un échangeur de chaleur (32) et un milieu de stockage de chaleur.

11. Système d'alimentation en eau chaude (1, 1a, 1b, 1c) selon la revendication 3,
dans lequel la seconde unité de génération d'eau chaude mélangée (52) est configurée pour mélanger l'eau d'alimentation jusque dans la première eau chaude mélangée ayant la température d'eau chaude stockée dans l'unité de mémoire (583), et pour générer la seconde eau chaude mélangée ayant une température inférieure à la température d'eau chaude stockée dans l'unité de mémoire (583).

12. Procédé d'alimentation en eau chaude dans lequel une alimentation en eau chaude est conduite en alimentant de l'eau chaude obtenue en mélangeant une première eau chaude alimentée par un premier système de chauffage d'eau (10, 70) et une seconde eau chaude alimentée par un second système de chauffage d'eau (20, 130), la seconde eau chaude ayant une température plus élevée qu'une température de la première chaude,
le procédé d'alimentation en eau chaude comprenant :
- une étape de génération de première eau chaude mélangée consistant à générer une première eau chaude mélangée obtenue en mélangeant la première eau chaude et la seconde eau chaude à un premier rapport de mélange ;
- une étape d'alimentation en eau consistant à alimenter de l'eau ;
- une étape de génération de seconde eau chaude mélangée consistant à générer une seconde eau chaude mélangée obtenue en mélangeant l'eau d'alimentation jusque dans la première eau chaude mélangée à un second rapport de mélange ;
- une étape de détection de seconde température consistant à détecter une température de la seconde eau chaude mélangée ;
- une étape de réglage de température de seconde eau chaude mélangée consistant à régler la température de la seconde eau chaude mélangée,
- une étape de second changement consistant à changer le second rapport de mélange sur la base de la température réglée de la seconde eau chaude mélangée et de la température détectée de la seconde eau chaude mélangée ; et
- une étape d'alimentation en eau chaude consistant à alimenter la seconde eau chaude mélangée,
**caractérisé en ce qu'**il comprend en outre :
- une étape de détection de première température consistant à détecter une température de la première eau chaude mélangée ;
- une étape de réglage de température de première eau chaude mélangée consistant à régler la température de la première eau chaude mélangée ; et
- une étape de premier changement consistant à changer le premier rapport de mélange sur la base de la température réglée de la première eau chaude mélangée et de la température détectée de la première chaude mélangée.
